Europäisches Patentamt

European Patent Office

Office européen des brevets

(19)

(11) **EP 0 792 919 B1**

(12) **EUROPÄISCHE PATENTSCHRIFT**

(45) Veröffentlichungstag und Bekanntmachung des Hinweises auf die Patenterteilung:
**19.09.2001  Patentblatt 2001/38**

(51) Int Cl.$^7$: **C09C 1/36**

(21) Anmeldenummer: **97102083.9**

(22) Anmeldetag: **10.02.1997**

(54) **Verfahren zur Verbesserung der Dispergiereigenschaften nach-behandelter Titandioxidpigmente**

Process for improving the dispersion properties of after-treated titanium dioxide pigments

Procédé d'amélioration des propriétés de dispersion de pigments de dioxyde de titane post-traités

(84) Benannte Vertragsstaaten:
**DE ES FI FR GB IT**

(30) Priorität: **27.02.1996  DE 19607249**

(43) Veröffentlichungstag der Anmeldung:
**03.09.1997  Patentblatt 1997/36**

(73) Patentinhaber: **KRONOS TITAN GmbH & Co. OHG 51373 Leverkusen (DE)**

(72) Erfinder:
• **Luginsland, Hans-Hermann, Dr. 51377 Leverkusen (DE)**
• **Elfenthal, Lothar, Dr. 40764 Langenfeld (DE)**
• **Tiedemann, Peter, Dr. 42799 Leichlingen (DE)**
• **Blümel, Siegfried, Dr. 40883 Ratingen (DE)**

(56) Entgegenhaltungen:
**DE-A- 2 251 935      DE-B- 1 057 855
FR-A- 850 882      FR-A- 2 197 953**

**Beschreibung**

Die Erfindung richtet sich auf ein Verfahren zur Verbesserung der Dispergiereigenschaften nachbehandelter Titandioxidpigmente, bei denen, ausgehend vom gemahlenen trockenen Pigmentgrundkörper, anorganische und/oder organische Stoffe auf ein Pigment aufgebracht werden.

*Bei der Zerkleinerung von Ofenklinker nach dem Sulfat-Prozeß mit Pendelmühlen, i. d. R. mit sog. Raymond-Mühlen, wird das Material mit Hilfe von Luft aus der Mühle gefördert und dabei werden die gröbsten Partikel durch einfache Einbauten abgetrennt und auf den Mahlring zurückgeführt (FR 850 882). Der mit dem Luftstrom ausgetragene Feststoff ist noch kein brauchbares Endprodukt. Die Teilchen werden i. d. R. noch nachbehandelt und dampfgemahlen.*

Die Nachbehandlung von Titandioxidteilchen (Grundkörper) zur Verbesserung der Eigenschaften, wie beispielsweise der Dispergierbarkeit, ist bekannt. Bei hochwertigen Pigmenten folgt der Beschichtung der Pigmente in der Regel eine Sichtmahlung, wodurch Agglomerate aus dem Beschichtungs- und Trocknungsprozeß zerstört werden und insbesondere der Grobanteil verkleinert wird (DE AS 10 57 855). *Mahlung und Trennung sind nicht unabhängig voneinander optimierbar.*

Aus der US 2 032 827 ist eine Mühle bekannt, in der eine Gasströmung quer zur Flugrichtung der Teilchen erzeugt wird, mit der die Verweilzeit und damit der Zerkleinerungsgrad verändert werden können. Eine solche Strahlmühle hat also auch die Eigenschaft, nach der Korngröße zu klassieren, was auch als Sichtung beschrieben werden kann.

Für manche Pigmenttypen bzw. spezielle Einsatzgebiete von Pigmenten ist jedoch die damit erreichbare Sichtung nicht ausreichend. In der EP 0 035 076 wird vorgeschlagen, den Grobanteil im nachbehandelten Pigment dadurch zu verkleinern, daß das Pigment vor der Nachbehandlung einer Naßmahlung und Naßklassierung unterworfen wird. Allerdings verschlechtert sich dabei die Filtrierbarkeit der nachbehandelten Suspension erheblich.

*Eine Trennung von Teilchen mit Sieben mit Maschenweite zwischen 0,3 und 5,0 mm ist in FR 2 197 953 beschrieben. Eine solche Trennung ist zur Vorbereitung auf eine Kompaktierung als Granulat sinnvoll, jedoch bei Pigmenten überflüssig weil wirkungslos. Bei Titandioxidpigmenten ist ein Kornscheiden im Bereich um oder unter 20 $\mu$m im großtechnischen Maßstab auch nicht mit Schwingsieben zu erreichen.*

Es wurde nun gefunden, daß man bei nachbehandelten Pigmenten den Grobanteil hinreichend herabsetzen kann, wenn man vor der Nachbehandlung das trockene Pigment separat sichtet. Die bei einer Naßmahlung beobachteten Schwierigkeiten bei der Filtration treten dabei nicht oder in deutlich verringertem Maße auf.

Die verwendete Sichtanlage ist auf die Produktanforderungen und -eigenschaften abgestimmt. Da Titandioxid zur Ausbildung von Ansätzen neigt, ist die Produktführung so zu gestalten, daß Toträume, Verengungen, Materialumlenkungen etc. möglichst vermieden werden (z. B. Flatterrohre, Vibrationsschächte, bewegliche Leitschaufeln). Aus dem selben Grund muß das zu sichtende Gut ausreichend vordispergiert werden, was durch die apparative Gestaltung des Sichtapparates und eine ausreichende Luftmenge gewährleistet wird. Nach dieser Vordispergierung setzt die Windsichtung ein, bei der in einer z. B. spiralförmigen Strömung gröbere Partikel aufgrund ihrer höheren Masse durch Fliehkraft abgetrennt werden.

| Trenngrenze $d_o$ | 8 - 80 $\mu$m |
|---|---|
| Aufgabemenge | 500 - 1500 kg/h |
| Drehzahl | 1000 - 4000 Upm |

Die Erfindung betrifft also ein Verfahren der eingangs erwähnten Art, das dadurch gekennzeichnet ist, daß vor der Nachbehandlung als gesonderter Verfahrensschritt eine dynamische Sichtung, bevorzugt mit einem Windsichter, durchgeführt wird.

Zwar mag es auf den ersten Blick als Nachteil erscheinen, daß für eine separate Sichtung des trockenen Pigmentes vor der Nachbehandlung ein zusätzlicher Apparat benötigt wird; für das Verfahren der Nachbehandlung als ganzes erweist sich jedoch die beanspruchte Variante als günstig und hinsichtlich der verbesserten Pigmentqualität als wirtschaftlich vorteilhaft.

Nach einer speziellen Variante des erfindungsgemäßen Verfahrens werden die noch nicht nachbehandelten Grobteilchen ausgeschleust und zurückgeführt und mit dem aufzumahlenden Titandioxid einer Mühle aufgegeben, wodurch der effektive Durchsatz bei der Nachbehandlung vergrößert wird und nicht unnütz die großen Partikel beschichtet werden müssen, die nach einer weiteren Zerkleinerung ohnehin noch einmal nachbehandelt werden müssen.

Ein separater Sichter ist besser als ein in einer Mühle integrierter Sichtapparat in der Lage, eine hinreichend scharfe Klassierung zu erreichen, und es ist auch relativ einfach, die Lage des Trennschnittes zu verändern.

Es war ferner überraschend, daß eine Entfernung übergroßer Teilchen durch Sichtung vor der Nachbehandlung oft schon ausreichen kann, gut dispergierbare Pigmente zu erhalten, bei denen auf eine übliche nachgeschaltete Dampfmahlung (mit integrierter Sichtung) sogar verzichtet werden kann und schon nach der Trocknung ohne weitere Mahlung, beispielsweise nach einer Sprühtrocknung, ein Pigment mit guten Dispergiereigenschaften erhalten werden kann.

Die Erfindung ist im folgenden weiter beispielhaft beschrieben.

Beispiel 1

Ausgehend von Ofenklinker aus dem Sulfatprozeß, der in einer Raymondmühle mit statischem Sichter auf eine mittlere Feinheit von ca. 0,3 µm vermahlen worden ist, werden mit einer bekannten anorganischen Nachbehandlungsmethode Aluminium-bzw. Aluminium- und Siliziumoxidhydrate auf dem Pigment abgeschieden. In der Tabelle 1 sind jeweils Eigenschaftsparameter aufgelistet, die ein Maß für die Dispergierbarkeit des Pigmentes sind, wobei sich die erfindungsgemäßen von den bekannten Pigmenten nur dadurch unterscheiden, daß sie einer zusätzlichen Sichtung mit einem dynamischen Windsichter (MPW 400, Alpine) vor der Nachbehandlung und Endmahlung unterworfen worden sind. Die Endmahlung wird in einer Spiralstrahlmühle (Dampfmühle) von 200 mm Durchmesser mit Hochdruckdampf unter Zusatz von Trimethylolpropan (TMP) oder Trimethylolethan (TME) als Mahlhilfe durchgeführt.

Die Prüfung der Pigmente auf Dispergierbarkeit erfolgt durch praxisnahe Methoden, d. h. in Systemen, in denen die beschriebenen Pigmente typischerweise eingesetzt werden.

Beim Dispergiertest in Polyethylen (PE) wird ein 50 %iges Konzentrat (masterbatch) in PE-LD hergestellt. Der Siebrückstand SR dient zur Beurteilung des Verteilungszustandes eines Titandioxid-Pigmentes in einem PE-Konzentrat.

Die Untersuchungen mit dem 34 µm Sieb werden mit einem Brabender-Meßextruder unter folgenden Prüfbedingungen durchgeführt:

| Gehäusetemperaturen | |
|---|---|
| Zone 1 | 170 °C |
| Zone 2 | 200 °C |
| Zone 3 | 200 °C |
| Schneckendrehzahl | 120 min$^{-1}$ |
| Schreibergeschwindigkeit | 10 cm/h |
| Siebronde | 34 µm Maschenweite |

Zu Beginn eines jeden Versuches werden 400 g PE-LD, MFI = 20, bei einer Schneckendrehzahl von 120 min$^{-1}$ durch das Sieb extrudiert, bis sich ein konstanter Druck $P_1$ (horizontaler Druckkurvenverlauf) einstellt. Ohne Unterbrechung der Extrusion wird anschließend 1 kg des jeweiligen 50 %igen TiO$_2$-Konzentrates bei gleicher Schneckendrehzahl durch das Sieb extrudiert.

Wenn die gesamte Konzentratmenge durch das Sieb extrudiert ist, wird der Extruder kurzzeitig leergefahren, so daß der Druck plötzlich abfällt und somit ein markanter Enddruck P2 abzulesen ist.

Als Maß für den Druckanstieg von 1 kg MB (50 % TiO$_2$) gilt:

$$\Delta P = P_2 - P_1$$

Multipliziert man diesen Wert mit 2, so ergibt sich die Druckdifferenz für 1 kg Titandioxid-Pigment in [bar/kg TiO$_2$].

Nach jedem Versuch werden Extruder und Siebpaket mit unpigmentiertem PE-LD nachgespült und gereinigt. Nach Ausbau des Siebes wird für den nächsten Versuch ein neues Siebpaket eingesetzt und, wie anfangs beschrieben, weiterverfahren.

Der Glykol-5 µm-Siebtest ist eine Methode zur Bestimmung der Filtrierbarkeit einer 20 %igen TiO$_2$-Suspension in Ethylenglykol. Je geringer die Durchlaufzeit bzw. je höher der Prozentsatz Filtrat in diesem Test ausfällt, desto besser ist die Dispergierbarkeit des Pigments.

Eine Mischung aus 60 Gewichtsteilen Titandioxid-Pigment und 40 Gewichtsteilen Ethylenglykol wird 30 min in einer Perlmühle (Netzsch, PE 075) gemahlen. Die so erhaltene Suspension wird mit weiterem Ethylenglykol verdünnt, bis der Gehalt an Titandioxid 20 Gew.-% beträgt. 500 ml dieser Suspension werden mit Hilfe einer Wasserstrahlpumpe bei konstantem Unterdruck durch ein Metallsieb (5 µm Maschenweite, 5,5 cm Durchmesser) gesaugt. Für diese Filtration wird de Anteil der durchgelaufenen Suspensionsmenge und die dafür benötigte Zeit bestimmt.

Beispielhafte Zahlenwerte sind in der Tabelle 1 zusammengestellt.

Beispiel 2

Der gleiche gemahlene Grundkörper wie in Beispiel 1 wird ohne vorherige anorganische Nachbehandlung in einer Dampfmühle wie in Beispiel 1 einer organischen Nachbehandlung unterworfen, wobei als organische Substanzen Trimethylolethan (TME), Neopentylglykol (NPG) oder Trimethylolpropan (TMP) verwendet werden. In der Tabelle 2 sind wieder die entsprechenden Meßwerte vom Pigment nach dem Stand der Technik und von vor der Nachbehandlung in dem gleichen Gerät wie in Beispiel 1 gesichtetem erfindungsgemäßem Material gegenübergestellt.

## Tabelle 1

| Grundkörper | | ungesichtet | gesichtet | ungesichtet | gesichtet |
|---|---|---|---|---|---|
| Nachbehandlung | | 0,6 % $Al_2O_3$ | | 0,9 % SiO2; 1,5 % $Al_2O_3$ | |
| PE - Test | | | | | |
| Druckanstieg | gesiebte Menge [g] | 333 | 1000 | 154 | 718 |
| 34 µm - Sieb | bar/kg $TiO_2$ | 1617 | 193 | 3682 | 689 |
| Siebrückstand | mg/kg $TiO_2$ | 40 | 21 | Siebbruch | 28 |
| 40 µm - Sieb | | | | | |
| 5 µm Siebtest | Filtrationszeit [s] | n. b. | 37 | 53 | 29 |
| | Filtrierbarer Anteil [%] | n. b. | 100 | 65 | 100 |

n. b. = nicht bestimmbar

EP 0 792 919 B1

Tabelle 2

| Grundkörper | | TME | | NPG | | TMP | |
|---|---|---|---|---|---|---|---|
| Nachbehandlung | | ungesichtet | gesichtet | ungesichtet | gesichtet | ungesichtet | gesichtet |
| **PE - Test** | | | | | | | |
| Druckanstieg | gesiebte Menge [g] | 190 | 1000 | 200 | 1000 | 187 | 1000 |
| 34 µm - Sieb | bar/kg $TiO_2$ | 2542 | 224 | 2538 | 203 | 2620 | 158 |
| Siebrückstand | mg/kg $TiO_2$ | 92 | 18 | 97 | 22 | 70 | 20 |
| 40 µm - Sieb | | | | | | | |
| 5 µm Siebtest | Filtrationszeit [s] | 52 | 26 | 53 | 27 | 62 | 28 |
| | Filtrierbarer Anteil [%] | 100 | 100 | 100 | 100 | 81 | 100 |

**Patentansprüche**

1. Verfahren zur Verbesserung der Dispergiereigenschaften nachbehandelter Titandioxidpigmente, bei denen, ausgehend vom gemahlenen trockenen Pigmentgrundkörper, anorganische und/oder organische Stoffe auf ein Pigment aufgebracht werden, **dadurch gekennzeichnet, daß** vor der Nachbehandlung als gesonderter Verfahrensschritt eine dynamische Sichtung durchgeführt wird.

2. Verfahren nach Anspruch 1, **dadurch gekennzeichnet, daß** die groben Partikel aus der Sichtung zur Mahlung zurückgeführt werden.

3. Verfahren nach Anspruch 1 oder 2, **dadurch gekennzeichnet, daß** für die Sichtung ein Windsichter eingesetzt wird.

**Claims**

1. Process for improving the dispersion properties of aftertreated titanium dioxide pigments, in the case of which, proceeding from the ground dry pigment parent substance, inorganic and/or organic substances are applied to a pigment, **characterised in that** a dynamic classification is carried out as a separate processing step prior to the aftertreatment.

2. Process according to claim 1, **characterised in that** the coarse particles from the classification are returned for grinding.

3. Process according to claim 1 or 2, **characterised in that** an air classifier is used for the classification.

**Revendications**

1. Procédé d'amélioration des propriétés de dispersion de pigments de dioxyde de titane post-traités, dans lequel, en partant d'une matière de base de pigment séché et broyé, on dépose des matériaux inorganiques et/ou organiques sur un pigment, **caractérisé en ce qu'**avant le post-traitement, on procède à un tamisage dynamique comme étape séparée du procédé.

2. Procédé selon la revendication 1, **caractérisé en ce que** les particules grossières sortant du tamisage sont renvoyées au broyage.

3. Procédé selon la revendication 1 ou 2, **caractérisé en ce que** pour le tamisage on utilise un séparateur à air.